# EUROPEAN PATENT APPLICATION

(11) **EP 3 678 008 A1**
(43) Date of publication of application: **08.07.2020**
(21) Application number: 17924229.2
(22) Date of filing: 08.09.2017
(51) Int. Cl.: G06F 3/0481

(54) **MESSAGE DISPLAY METHOD AND DEVICE AND TERMINAL**

(71) Applicant: GUANGDONG OPPO MOBILE TELECOMMUNICATIONS CORP., LTD., Wusha, Chang'an Dongguan, Guangdong 523860 (CN)
(72) Inventor: LI, Hong, Dongguan Guangdong 523860 (CN)
(74) Representative: Manitz Finsterwald Patent- und Rechtsanwaltspartnerschaft mbB
(86) International application number: PCT/CN2017/101140
(87) International publication number: WO 2019/047189

(57) **Abstract**

Provided in the embodiments of the present application are a message display method, wherein the method comprises: receiving a message from an application program; displaying a message notification for the message in a first display area on a screen; and additionally displaying an operation control corresponding to the message notification in a navigation bar, the operation control being a control used for processing the message notification, and the navigation bar being located in a second display area on the screen. According to the present application, an operation control corresponding to a message is additionally displayed in the navigation bar, and a user may trigger a touch signal on the operation control to perform an operation corresponding to the touch signal, thereby avoiding the problem of the user having difficulty in touching the first area when operating the mobile terminal with one hand since the first display area is located at the top of the display screen, and adding the functions of the navigation bar, thus increasing the human-machine interaction efficiency.

## Description

### TECHNICAL FIELD

Embodiments of the present disclosure relate to the human-machine interaction field, and in particular, to a message display method, a device, and a terminal.

### BACKGROUND

In terminals adopting smart operation systems, when new messages are received, message notifications of these messages have various display methods: displaying in a status bar (also known as a pull-down notification bar) at the top; displaying in a pop up banner at a top of a touch screen; or displaying in a lock screen interface.

While a user is using a terminal, a message notification usually adopts a pop up banner at a top of a touch screen to display. For instance, when the terminal receives a new short message, the top of the touch screen can pop up a banner-typed message notification, this message notification is displayed on an original user interface in a suspended manner. The message notification displays a source phone number and a part of message content of the new short massage. If the user clicks the new message notification, the terminal will skip into a short message application program and display all message content of the new short message.

However, since screen-to-body ratios of terminals are higher and higher, a distance between a top and a bottom of a touch screen is long. When a user holds a terminal with a single hand, it is difficult for a thumb to click a message notification at a top of a touch screen, and thus it is prone to click other interface elements and generate mistaken operations.

### SUMMARY OF THE DISCLOSURE

Embodiments of the present disclosure provide a message display method, a device, and a terminal, which can solve the problem that when a user holds a terminal with a single hand, it is difficult for a thumb to click a message notification at a top of a touch screen, and thus it is prone to click other interface elements and generate mistaken operations. The technical solutions are as follows.

According to a first aspect of embodiments of the present application, a message display method is provided. The method comprises: receiving a message from an application program; displaying a message notification for the message in a first display area on a screen; and additionally displaying an operation control corresponding to the message notification in a navigation bar, wherein the operation control is a control configured to process the message notification, and the navigation bar is located in a second display area on the screen.

According to a second aspect of embodiments of the present application, a message display device is provided. The device comprises:a receiving module configured to receive a message from an application program; a display module configured to display a message notification for the message in a first display area on a screen; wherein,the display module is further configured to additionally display an operation control corresponding to the message notification in a navigation bar, the operation control is a control configured to process the message notification, and the navigation bar is located in a second display area on the screen.

According to a third aspect of embodiments of the present disclosure, a terminal is provided. The terminal comprises a processor and a memory, the memory stores at least one instruction, and the instruction is loaded and executed by the processor to implement the message display method according to the first aspect of embodiments of the present disclosure.

According to a fourth aspect of embodiments of the present disclosure, a computer readable storage medium is provided. The storage medium stores at least one instruction, and the instruction is loaded and executed by a processor to implement the message display method according to the first aspect of embodiments of the present disclosure.

Advantageous effect of the technical solutions provided by embodiments of the present disclosure comprises the follows.

Since a distance between a top and a bottom of a display screen is long, message notifications are usually displayed on a top of a touch display screen, while a navigation bar is displayed on a bottom of the touch display screen. When a terminal receives a message notification of a message, an operation control corresponding to the message notification is additionally displayed in a navigation bar;when a first touch signal is triggered on the operation control, message content of the message is displayed by a user interface of an application program corresponding to the message, so that a user can view the message content justthrough the operation control at a bottom of the touch display screen. Thus, the problem that it is difficult to touch a top of a touch display screen when a user operates a mobile terminal with a single hand is avoided, and effect of reducing mistaken operations of users, increasing functions of a navigation bar, and improving human-machine interaction efficiency is achieved.

### BRIEF DESCRIPTION OF THE DRAWINGS

In order to describe technical solutions of embodiments of the present disclosure more clearly, drawings required being used in the description of the embodiments will be briefly introduced below. Obviously, the drawings in the following description are merely some embodiments of the present disclosure. For one of ordinary skill in the art, it is possible to obtain other drawings according to these drawings without paying any creative work.
FIG 1 is a structural block diagram of a terminal provided by an exemplary embodiment of the present disclosure.
FIG 2 is a structural block diagram of a terminal provided by another exemplary embodiment of the present disclosure.
FIGS. 3A-3F are schematic appearance views of a terminal provided by an exemplary embodiment of the present disclosure.
FIG 4 is a flow chart of a message display method provided by an exemplary embodiment of the present disclosure.
FIG 5 is a flow chart of a message display method provided by another exemplary embodiment of the present disclosure.
FIGS. 6A-6C are schematic views of a message display method provided by an exemplary embodiment of the present disclosure.
FIG 7 is a flow chart of a message display method provided by another exemplary embodiment of the present disclosure.
FIGS. 8A-8E are schematic views of a message display method provided by another exemplary embodiment of the present disclosure.
FIG 9 is a flow chart of a message display method provided by an exemplary embodiment of the present disclosure.
FIG. 10 is a structural block diagram of a message display device provided by an exemplary embodiment of the present disclosure.

### DETAILED DESCRIPTION

In order to make purposes, technical solutions, and advantages of the present disclosure be clearer, embodiments of the present disclosure will be further described in detail below in accompany with drawings.

"Module" mentioned in the present disclosure generally refers to programs or instructions stored in a memory and being capable of implement certain functions. "Unit" mentioned in the present disclosure generally refers to functional structures divided according to logic; the "unit" can be implemented by pure hardware, or implemented by a combination of software and hardware.

"A plurality of' mentioned in the present disclosure refers to two or more than two. "And/or" describes association relationships of associated objects, and indicates that three kinds of relationships may exist, for example, A and/or B may indicate three situations: A exists singly; A and B exist simultaneously; and B exists singly. The character "/" generally indicates that previous and latter associated objects have an "or" relationship.

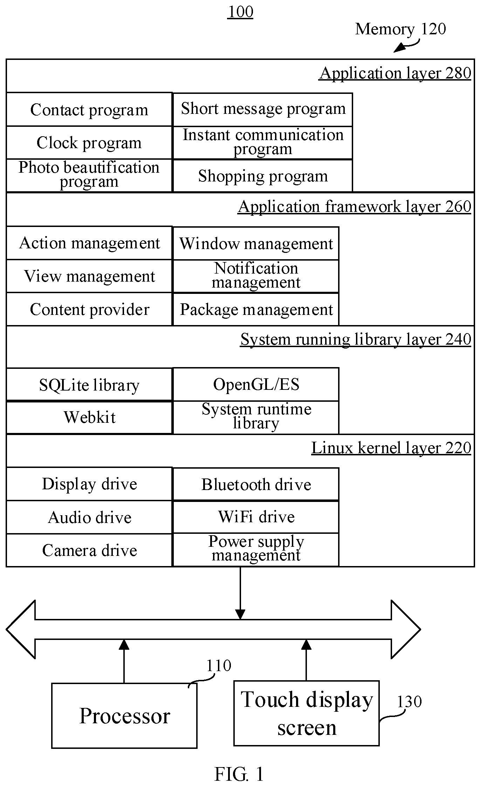

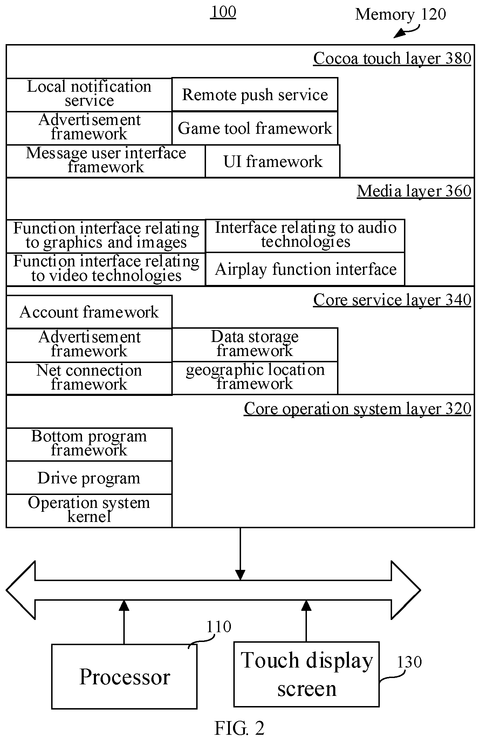

Referring to FIG. 1 and FIG. 2, which show structural block diagrams of a terminal 100 provided by an exemplary embodiment of the present disclosure. The terminal 100 can be a mobile phone, a tablet computer, a notebook computer, an electronic book, etc. The terminal 100 of the present disclosure can comprise one or more following parts: a processor 110, a memory 120, and a touch display screen 130.

The processor 110 can include one or more processing core(s). The processor 110 connects various parts in the whole terminal 100 with various interfaces and wires, and executes various functions of the terminal 100 and processes data by running or executing instructions, programs, code sets, or instruction sets stored in the memory 120 and calling data stored in the memory 120. Optionally, the processor 110 can adopt at least one kind of hardware manner in digital signal processing (DSP), field-programmable gate array (FPGA), and programmable logic array (PLA) to implement. The processor 110 can integrate one or a combination of some of a central processing unit (CPU), a graphics processing unit (GPU), a modem, etc. Wherein, the CPU mainly processes operation systems, user interfaces, application programs, etc.; the GPU is configured to be responsible for rendering and drawing of content required to be displayed by the touch display screen 130; the modem is configured to process wireless communication. It can be understood that the modem may also not be integrated into the processor 110 and implemented independently by a single chip.

The memory 120 can include a random access memory (RAM), and can also include a read-only memory. Optionally, the memory 120 includes a non-transitory computer-readable storage medium. The memory 120 can be used to store instructions, programs, codes, code sets, or instruction sets. The memory 120 can include a program storage area and a data storage area, wherein, the program storage area can store instructions configured to implement operation systems, instructions configured for at least one function (e.g., a touch control function, a sound playing function, an image playing function, etc.), instructions configured to implement the following method embodiments, etc.; the data storage area can store data established according to use of the terminal 100 (e.g., audio data, telephone book, etc.). The memory 120 further stores at least one instruction, the at least one instruction is configured to implement file share methods provided by the following method embodiments when being executed by the processor 110.

Taking an operation system being an Android system as an example, programs and data stored in the memory 120 are as shown in FIG. 1. The memory 120 stores a Linux kernel layer 220, a system running library layer 240, an application framework layer 260, and an application layer 280. The Linux kernel layer 220 provides bottom drive, such as display drive, audio drive, camera drive, Bluetooth drive, Wi-Fi drive, power management, and so on, to various hardware of the terminal 100. The system running library layer 240 provides main feature support for the Android system by some C/C++ libraries. For example, an SQLite library provides support for a database, an OpenGL/ES library provides support for 3D drawing, a Webkit library provides support for a browser kernel, etc. In the system running library layer 240, an Android Runtime library is further provided, it mainly provides some core libraries, which can allow developers to use Java languages to write Android applications. The application framework layer 260 provides various API that may be used when establishing application programs, and developers, by using these API, can also establish their own application programs, such as action management, window management, view management, notification management, content provider, package management, call management, resource management, and positioning management. At least one application program runs in the application layer 280, the application program can be a contact program, a short message program, a clock program, a camera application, and so on, which are built in an operation system; and can also be an application program developed by a third party developer, such as an instant communication program, a photo beautification program, and so on.

Taking an operation system being an IOS system as an example, programs and data stored in the memory 120 are as shown in FIG. 2. The IOS system includes: a core OS layer 320, a core services layer 340, a media layer 360, and a cocoa touch layer 380. The core OS layer 320 includes an operation system kernel, a drive program, and a bottom program frameworks, these bottom program frameworks provide functions which are more similar to that of hardware, so as to be used by program frameworks in the core services layer 340. The core services layer 340 provides application programs with required system services and/or program frameworks, such as a foundation framework, an account framework, an advertisement framework, a data storage framework, a net connection framework, a geographic location framework, a motion framework, and so on. The media layer 360 provides application programs with interfaces relating to video and audio aspects, such as interfaces relating to graphics and images, interfaces relating to audio technologies, interfaces relating to video technologies, airplay interfaces of audio and video transmission technologies, and so on. The cocoa touch layer 380 provides various widely-used frameworks relating to interfaces for application program development, and the cocoa touch layer 380 is responsible for touch interaction operations of users on the terminal 100, for example, local notification services, remote push services, advertisement frameworks, game tool frameworks, information user interface (UI) frameworks, user interface UIKit frameworks, map frameworks, and so on.

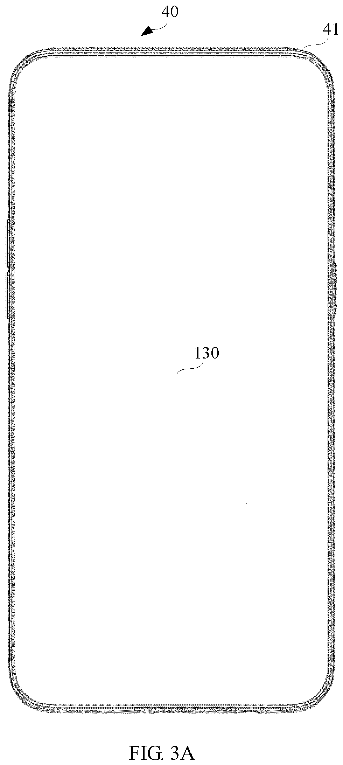

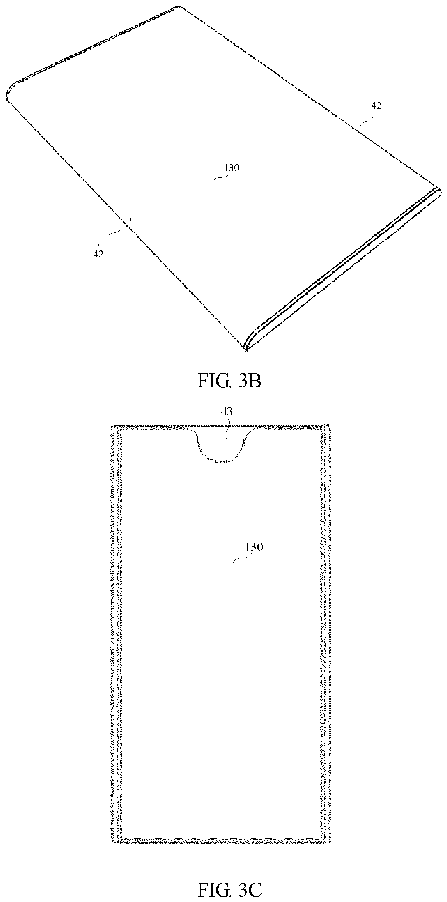

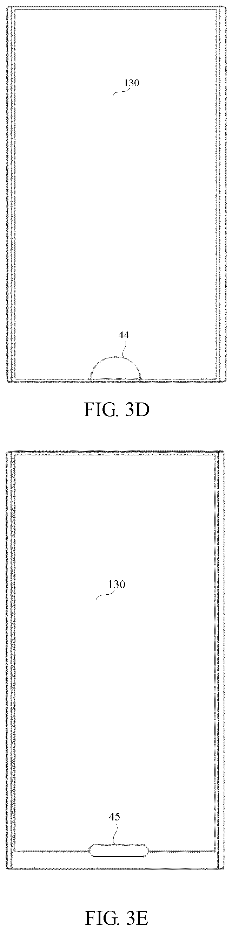

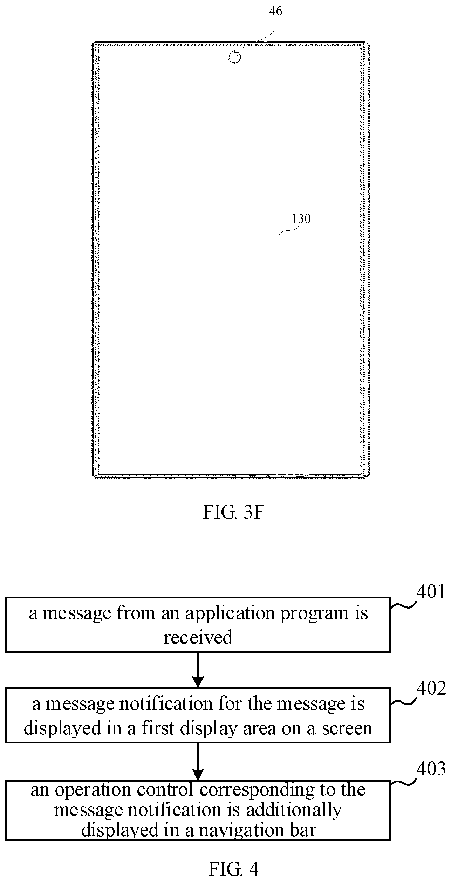

In the frameworks shown in FIG. 3, frameworks relating to most application programs include but are not limited to: a basic framework in the core services layer 340 and a UIKit framework in the cocoa touch layer 380. The basic framework provides many basic object classes and data types, and provides the most basic system services for all application programs, which have nothing to do with a UI. A class provided by the UIKit framework is a basic UI class library, and is used to establish a user interface based on touches. An IOS application program can provide a UI based on the UIKit framework, therefore, it provides a basic structure of application programs, which is used to establish user interfaces, draw, process events interacting with users, respond gestures, and so on.

The touch display screen 130 is configured to receive touch operations on it or near it made by users using any suitable objects, such as fingers, touch pens, etc., and display user interfaces of various application programs. The touch display screen 130 is usually disposed on a front panel of the terminal 100. The touch display screen 130 can be designed to be a full screen, a curved screen, or a special screen. The touch display screen 130 can also be designed to be a combination of a full-screen and a curved screen, or a combination of a special screen and a curved screen, this embodiment has no limit here. These screens are detailed as follows.

### Full screens

A full screen can refer to a screen design in which a screen-to-body ratio of the touch display screen 130 occupying a front panel of the terminal 100 exceeds a threshold value (e.g., 80%, 90%, or 95%). A calculating method for the screen-to-body ratio is: (an area of the touch display screen 130/an area of a front panel of the terminal 100) *100%; another calculating method for the screen-to-body ratio is: (an area of an actual display area of the touch display screen 130/an area of a front panel of the terminal 100) *100%; further another calculating method for the screen-to-body ratio is: (a diagonal length of the touch display screen 130/ a diagonal length of a front panel of the terminal 100) *100%. Exemplarily, in the example shown in FIG. 3A, almost all area of a front panel of the terminal 100 is the touch display screen 130; on the front panel 40 of the terminal 100, except other area outside of an edge formed by a middle frame 41, the touch display screen 130 occupies all area. Four corners of the touch display screen 130 can be right angles or fillets.

A full screen can also be a screen design in which at least one kind of front panel element is integrated in or under the touch display screen 130. Optionally, the at least one kind of front panel element includes: a camera, a fingerprint sensor, an approach light sensor, a distance sensor, etc. In some embodiments, other elements on a front panel of a conventional terminal are integrated in all or parts of the area of the touch display panel 130, for example, a light sensing element in a camera is split into a plurality of light sensing pixels, and each light sensing pixel is integrated in a black area in each display pixel in the touch display screen 130. Since at least one kind of front panel element is integrated inside the touch display screen 130, the full screen has a higher screen-to-body ratio.

Of course, in other embodiments, it is also possible to dispose front panel elements of a front panel of a conventional terminal at an side edge or a back of the terminal 100, for example, dispose an ultrasound fingerprint sensor under the touch display screen 130, dispose a bone conduction earpiece inside the terminal 100, and design a camera to be a structure which is located at a side edge of the terminal and pluggable.

In some optional embodiments, in the situation that the terminal 100 adopts a full screen, one side edge, or two side edge (e.g., left and right side edges), or four side edges (e.g., upper, lower, left, and right side edges) of a middle frame of the terminal is/are provided thereon with edge touch sensors 120, these edge touch sensors 120 are used to detect at least one kind of operation in touch operations, clicking operations, pressing operations, sliding operations, and the like of users on the middle frame. Each edge touch sensor 120 can be any kind of touch sensors, thermal sensors, pressure sensors, and so on. Users can apply operations on the edge touch sensors 120 to control application programs in the terminal 100.

### Curved screens

A curved screen refers to a screen design in which a screen area of the touch display screen 130 is not located in one plane. Generally, a curved screen has at least one such cross section: the cross section is in a curved shape, and a projection of the curved screen along a direction of any plane being perpendicular to the cross section is a planar screen design; wherein, the curved shape can be a U-shape. Optionally, a curved screen refers to that at least one side edge of the touch display screen 130 extends to cover on a middle frame of the terminal 100. Since the side edge of the touch display screen 130 extends to cover the middle frame of the terminal 100, that is, the middle frame, which does not have a display function and a touch control function originally, is covered to form a displayable area and/or an operable area, such that the curved screen has a higher screen-to-body ratio. Optionally, in the example shown in FIG. 3B, the curved screen refers to a screen design of which left and right side edges 42 are curved shapes; alternatively, the curved screen refers to a screen design of which upper and lower side edges are curved shapes; alternatively, the curved screen refers to a screen design of which upper, lower, left, and right side edges are all curved shapes. In optional embodiments, a curved screen is made of touch display screen materials having certain flexibility.

### Special screens

A special screen is a touch display screen of which an appearance shape is an irregular shape, wherein the irregular shape is neither rectangle nor rounded rectangle. Optionally, a special screen refers to a screen design in which a rectangular or rounded rectangular touch display screen 130 is provided with a protrusion, a gap, and/or a hole. Optionally, the protrusion, the gap, and/or the hole can be located in an edge, a screen center area, or both of them of the touch display screen 130. When the protrusion, the gap, and/or the hole are disposed at an edge, they can be disposed at a middle position or two ends of the edge; when the protrusion, the gap, and/or the hole are disposed at a screen center area, they can be disposed in one or more areas of an upper area, an upper left area, a left area, a lower left area, a lower area, a lower right area, a right area, and an upper right area of the screen. When being disposed in a plurality of areas, the protrusion, the gap, and/or the hole can be distributed concentratedly, and can also be distributed dispersedly; can be distributed symmetrically, and can also be distributed asymmetrically. Optionally, the numbers of the protrusion, the gap, and/or the hole are not limited.

Since a special screen covers an upper forehead area and/or a lower forehead area of a touch display screen to form a displayable area and/or an operable area, the touch display screen is enabled to occupy more space on a front panel of a terminal, and thus the special screen also has a larger screen-to-body ratio. In some embodiments, the gap and/or the hole is configured to receive at least one kind of front panel element, the front panel element includes at least one of a camera, a fingerprint sensor, an approach light sensor, a distance sensor, an earpiece, an environmental light brightness sensor, and a physical button.

Exemplarily, the gap can be disposed at one or more edges, and the gap can be a semicircular gap, a right angle rectangular gap, a rounded rectangular gap, or an irregular shaped gap. Schematically, in the example shown in FIG. 3C, the special screen can be a screen design in which a middle position of an upper edge of the touch display screen 130 is provided with a semicircular gap 43, the vacated space of the semicircular gap 43 is configured to receive at least one kind of front panel element of a camera, a distance sensor (also known as approach sensor), an earpiece, and an environmental light brightness sensor. Schematically, as shown in FIG. 3D, the special screen can be a screen design in which a middle position of a lower edge of the touch display screen 130 is provided with a semicircular gap 44, the vacated space of the semicircular gap 44 is configured to receive at least one kind of element of a physical button, a fingerprint sensor, and a microphone. Schematically, in the example shown in FIG. 3E, the special screen can be a screen design in which a middle position of a lower edge of the touch display screen 130 is provided with a semi-elliptical gap 45, at the same time, a front panel of the terminal 100 also defines a semi-elliptical gap, the two semi-elliptical gaps form a elliptical area, the elliptical area is configured to receive a physical button or a fingerprint identification module. Schematically, in the example shown in FIG. 3F, the special screen can be a screen design in which an upper half part of the touch display screen 130 is provided with at least one hole 45, the vacated space of the hole 45 is configured to receive at least one kind of front panel element of a camera, a distance sensor, an earpiece, and an environmental light brightness sensor.

In addition, one of ordinary skill in the art can understand that the structures of the terminal 100 shown in the aforementioned drawings do not form any limitation to the terminal 100, the terminal can comprise more or less elements than that shown in the drawings, or combinations of some elements, or different arrangements of elements. For instance, the terminal 100 further comprises elements such as an radio frequency circuit, an input unit, a sensor, an audio circuit, a wireless fidelity (Wi-Fi) module, a power supply, a Bluetooth module, etc., which are not described in detail here.

First, some terms involved in the present disclosure are briefly introduced.

Android operation system: an operation system based on Linux produced by Google USA, which is free and has open source codes, and is mainly used in mobile devices.

Application program: it is called as "application" for short; in an Android operation system, an application program usually includes at least one program component. Program components are classified into four kinds: activity components; service components; content provider components; and broadcast receiver components.

Activity component: a component in an Android application program being configured for interaction with users. One Android application program can include zero to a plurality of activity components.

Content provide component: a component in an Android application configured to provide data to other applications or other components in a current application, such as ringtones, wallpapers, phonebooks, etc. It can encapsulate data in various formats, and provide the data in standard forms to other applications or components for use.

Intent message: a kind of message in an Android application program implementing communication among various program components. The various program components can be different components in the same application program, and can also be different components in different application programs. An intent message is configured for describing an action, data involved in the action, and additional data of an operation of an application program; the Android operation system is configured for finding a corresponding program component according to the description of the intent message, delivering the intent message to the called program component, and completing calling for the program component. Intent messages are classified into two kinds: explicit intent messages and implicit intent messages.

Explicit intent message: an intent message clearly pointing out a name of a target program component is called as an explicit intent message. For example, an A program component needs to send an intent message "dialing a telephone number 18688888888"; if the A program component expects a B program component to respond the intent message, the A program component assigns that a target program component is the B program component in the intent message; thus, when the Android operation system receives the intent message, the intent message will be delivered to the B program component to process.

Implicit intent message: an intent message not clearly pointing out a name of a target program component is called as an implicit intent message. For example, an A program component needs to send an intent message "dialing a telephone number 18688888888"; if the A program component does not know which program component should respond the intent message, the A program component can assign no target program component in the intent message; thus, when the Android operation system receives the intent message, it can check monitored intent message types which are registered in advance by various program components; if it is checked that a B program component monitors intent messages relating to telephone calls, the Android operation system delivers the intent message to the B program component to process. Alternatively, the Android operation system can broadcast the intent message, so that a broadcast receiver component being interested in intent messages relating to telephone calls receive and process the intent message.

System UI (User Interface) component: a component in an Android operation system configured for interaction with users; it provides visualized user interfaces to the Android operation system.

Referring to FIG. 4, which shows a flow chart of a message display method provided by an exemplary embodiment of the present disclosure. The message display method can be applied in the terminal 100 provided in the above drawings. The message display method comprises the following operations.

Operation 401, a message from an application program is received.

The aforesaid message includes but is not limited to at least one of a short message, a goods message, a news message, a reminder message, a multimedia message, and an instant communication message.

Schematically, when the aforesaid message is a short message, the application program is a short message application program; when the aforesaid message is a goods message, the application program is a shopping application program; when the aforesaid message is a news message, the application program is a news application program; when the aforesaid message is a reminder message, the application program is a memorandum application program; when the aforesaid message is a multimedia message, the application program is a player application program; when the aforesaid message is an instant communication message, the application program is an instant communication application program.

Operation 402, a message notification for the message is displayed in a first display area on a screen.

The aforesaid first display area is located in a middle area and/or an area above the middle area of a touch display screen. Display manners of the message notification include but are not limited to at least one of displaying the message notification in a status bar at the top (also calleda pull-down notification bar), displaying the message notification on a banner popped up from the top of the touch display screen, displaying the message notification on a lock screen interface, and displaying the message notification of the message in an superimposing manner at any position of a user interface. Optionally, when the display manner of the message notification is displaying the message notification in the status bar, the displayed message notification is located in an area above the middle area of the touch display screen; when the display manner of the message notification is displaying the message notification on a banner popped up from the top of the touch display screen, the displayed message notification is located in a top of the touch display screen; when the display manner of the message notification is displaying the message notification on a lock screen interface, the displayed message notification is located in an area above the middle area of the touch display screen; when the display manner of the message notification is displaying the message notification of the message in an superimposing manner at any position of a user interface, the displayed message notification is located in a middle area of the touch display screen. In this embodiment, the display manner "displaying the message notification on a banner popped up from the top of the touch display screen" of the message notification is explained as an example.

Operation 403, an operation control corresponding to the message notification is additionally displayed in a navigation bar.

The operation control is a control configured to process the message notification, and the navigation bar is located at a second display area on the screen. Optionally, the second display area is located at a bottom of the touch display screen. Optionally, the navigation bar includes at least one virtual button.

Optionally, the operation control corresponding to the message notification displays an icon of an application program corresponding to the message, and can also display a preset icon, and further can display a thumbnail of the content of the message, embodiments of the present disclosure have no limit for this.

In conclusion, by additionally displaying an operation control corresponding to the messagein a navigation bar, a user can trigger a touch signal on the operation control to execute an operation corresponding to the touch signal, so that the problem that it is difficult to touch the first display area when a user operates a mobile terminal with a single hand, because the first display area is located at the top of the display screen is avoided, functions of a navigation bar are increased, and thus human-machine interaction efficiency is improved.

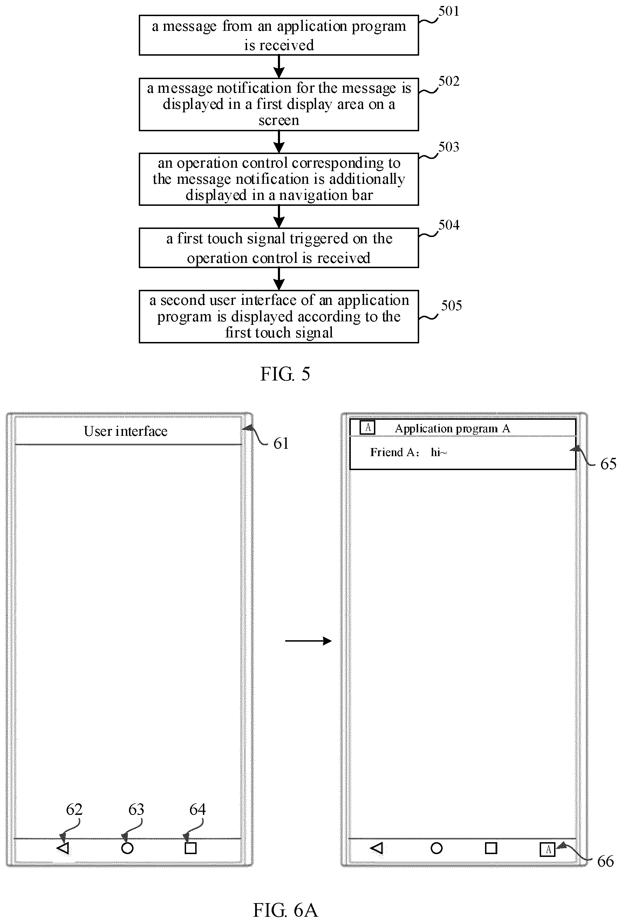

Referring to FIG. 5, which shows a flow chart of a message display method provided by another exemplary embodiment of the present disclosure. The message display method can be applied in the terminal 100 provided in the above drawings. The message display method comprises the following operations.

Operation 501, a message from an application program is received.

The application program is an application program corresponding to the aforesaid message. Alternatively, the application program is an application program configured to receive, display, and process the message.

The aforesaid message includes but is not limited to at least one of a short message, a goods message, a news message, a reminder message, a multimedia message, and an instant communication message.

Schematically, when the aforesaid message is a short message, the application program is a short message application program; when the aforesaid message is a goods message, the application program is a shopping application program; when the aforesaid message is a news message, the application program is a news application program; when the aforesaid message is a reminder message, the application program is a memorandum application program; when the aforesaid message is a multimedia message, the application program is a player application program; when the aforesaid message is an instant communication message, the application program is an instant communication application program.

Operation 502, a message notification for the message is displayed in a first display area on a screen.

The aforesaid first display area is located in a middle area and/or an area above the middle area of a touch display screen. Display manners of the message notification include but are not limited to at least one of displaying the message notification in a status bar at the top (also called a pull-down notification bar), displaying the message notification on a banner popped up from the top of the touch display screen, displaying the message notification on a lock screen interface, and displaying the message notification of the message in an superimposing manner at any position of a user interface. Optionally, when the display manner of the message notification is displaying the message notification in the status bar, the displayed message notification is located in an area above the middle area of the touch display screen; when the display manner of the message notification is displaying the message notification on a banner popped up from the top of the touch display screen, the displayed message notification is located in a top of the touch display screen; when the display manner of the message notification is displaying the message notification on a lock screen interface, the displayed message notification is located in an area above the middle area of the touch display screen; when the display manner of the message notification is displaying the message notification of the message in an superimposing manner at any position of a user interface, the displayed message notification is located in a middle area of the touch display screen. In this embodiment, the display manner "displaying the message notification on a banner popped up from the top of the touch display screen" of the message notification is explained as an example.

Operation 503, an operation control corresponding to the message notification is additionally displayed in a navigation bar.

The navigation bar is displayed at a bottom of the touch display screen. Optionally, the navigation bar includes at least one virtual button.

Optionally, the operation control corresponding to the message notification displays an icon of an application program corresponding to the message, and can also display a preset icon, and further can display a thumbnail of the content of the message, embodiments of the present disclosure have no limit for this.

Schematically, that the message is an instant communication message is explained as an example. As shown in FIG. 6A, a current interface of the terminal is a user interface 61, a navigation bar includes three virtual buttons, which are respectively a back key 62, a home page key (also called Home key) 63, and a menu key 64; when a message sent by a friend A in an application program A is received, the manner of displaying the message notification on a banner popped up from the top of the touch display screen is adopted; a message notification of the message is displayed on a banner 65 popped up from the top of the touch display screen, and an operation control 66 corresponding to the message notification is additionally displayed in the navigation bar; the operation control 66 displays an icon of an application program corresponding to the message, that is, an icon of the application program A.

In this embodiment, that the operation control 66 is additionally displayed at the right of the menu key 65 is explained as an example. In actual operations, the operation control 66 can also be additionally displayed between the back key 62 and the home page key 63, or between the home page key 63 and the menu key 65, or at the left of the back key 62. The operation control 66 can also determine the display position of the operation control according to a holding manner of a user for the terminal.

Operation 504, a first touch signal triggered on the operation control is received.

The first touch signal is a touch signal configured to call an application program corresponding to a message. Optionally, a user can perform one or more operation(s) of clicking, double-clicking, long pressing, sliding, or the like on an operation control displayed by the touch display screen. An operation applied by a user can trigger a corresponding first touch signal on the touch display screen, and the terminal can receive the first touch signal on the operation control.

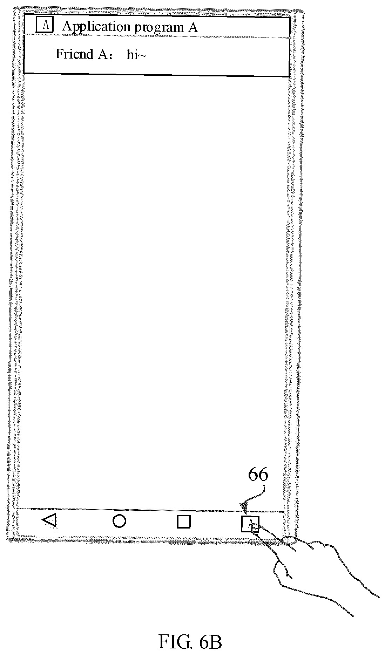

Schematically, as shown in FIG. 6B, a user clicks the operation control 66 in the navigation bar, the click operation triggers a corresponding first touch signal on the touch display screen, and the terminal can receive the first touch signal on the operation control 66.

Operation 505, a second user interface of an application program is displayed according to the first touch signal.

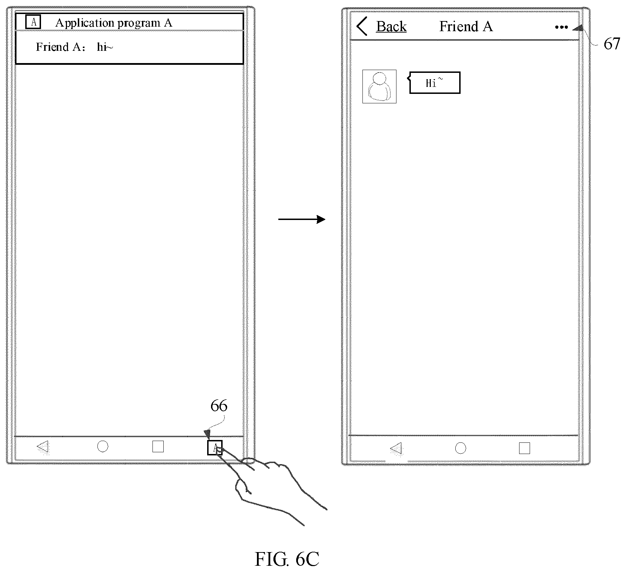

The second user interface is configured to display message content of the message. Schematically, as shown in FIG. 6C, after a user triggers the first touch signal on the operation control in the navigation bar, the terminal displays a second user interface 67 of the application program A according to the first touch signal, and stops displaying the operation control 66 in the navigation bar. The second user interface 67 displays content of the message sent from the friend A.

Optionally, after displaying the second user interface of the application program, the terminal stops displaying the operation control corresponding to the message notification in the navigation bar.

In conclusion, since a distance between a top and a bottom of a display screen is long, message notifications are usually displayed on a top of a touch display screen, while a navigation bar is displayed on a bottom of the touch display screen. When a terminal receives a message notification of a message, an operation control corresponding to the message notification is additionally displayed in a navigation bar;when a first touch signal is triggered on the operation control,message content of the message is displayed by a user interface of an application program corresponding to the message, so that a user can view the message content just through the operation control at a bottom of the touch display screen. Thus, the problem that it is difficult to touch a top of a touch display screen when a user operates a mobile terminal with a single hand is avoided, and effect of reducing mistaken operations of users, increasing functions of a navigation bar, and improving human-machine interaction efficiency is achieved.

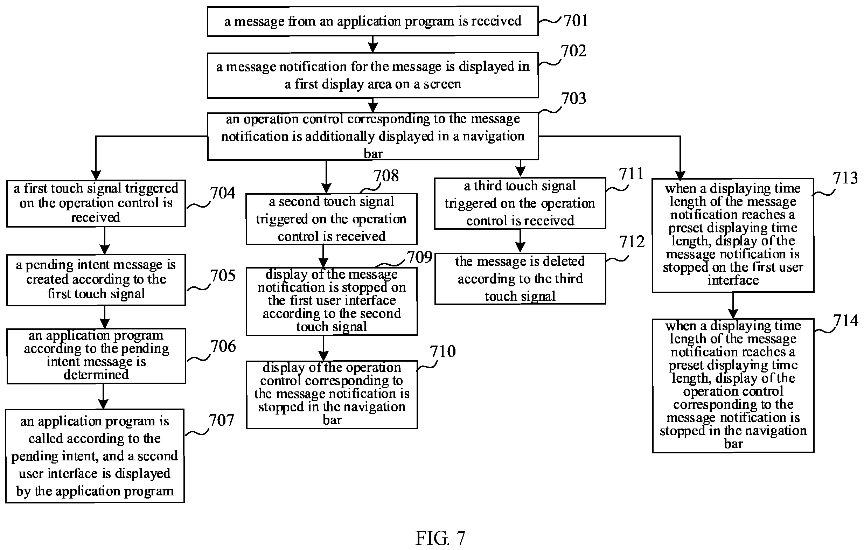

Referring to FIG. 7, which shows a flow chart of a message display method provided by an exemplary embodiment of the present disclosure. The message display method can be applied in the terminal provided in the above drawings. The message display method comprises the following operations.

Operation 701, a message from an application program is received.

Once receiving a message, the terminal displays a message notification of the message on a display screen through a system UI component. The aforesaid message includes but is not limited to at least one of a short message, a goods message, a news message, a reminder message, a multimedia message, and an instant communication message.

The application program is an application program corresponding to the aforesaid message. Alternatively, the application program is an application program configured to receive, display, and process the message.

Schematically, when the aforesaid message is a short message, the application program is a short message application program; when the aforesaid message is a goods message, the application program is a shopping application program; when the aforesaid message is a news message, the application program is a news application program; when the aforesaid message is a reminder message, the application program is a memorandum application program; when the aforesaid message is a multimedia message, the application program is a player application program; when the aforesaid message is an instant communication message, the application program is an instant communication application program.

Operation 702, a message notification for the message is displayed in a first display area on a screen.

The aforesaid first display area is located in a middle area and/or an area above the middle area of a touch display screen. Display manners of the message notification include but are not limited to at least one of displaying the message notification in a status bar at the top (also calleda pull-down notification bar), displaying the message notification on a banner popped up from the top of the touch display screen, displaying the message notification on a lock screen interface, and displaying the message notification of the message in an superimposing manner at any position of a user interface. Optionally, when the display manner of the message notification is displaying the message notification in the status bar, the displayed message notification is located in an area above the middle area of the touch display screen; when the display manner of the message notification is displaying the message notification on a banner popped up from the top of the touch display screen, the displayed message notification is located in a top of the touch display screen; when the display manner of the message notification is displaying the message notification on a lock screen interface, the displayed message notification is located in an area above the middle area of the touch display screen; when the display manner of the message notification is displaying the message notification of the message in an superimposing manner at any position of a user interface, the displayed message notification is located in a middle area of the touch display screen. In this embodiment, the display manner "displaying the message notification on a banner popped up from the top of the touch display screen" of the message notification is explained as an example.

Operation 703, an operation control corresponding to the message notification is additionally displayed in a navigation bar.

The terminal displays a navigation bar on the display screen through a system UI component, and additionally displays an operation control corresponding to the message notification in the navigation bar through the system UI component. Optionally, the operation control corresponding to the message notification displays an icon of an application program corresponding to the message, and can also display a preset icon, and further can display a thumbnail of the content of the message, embodiments of the present disclosure have no limit for this.

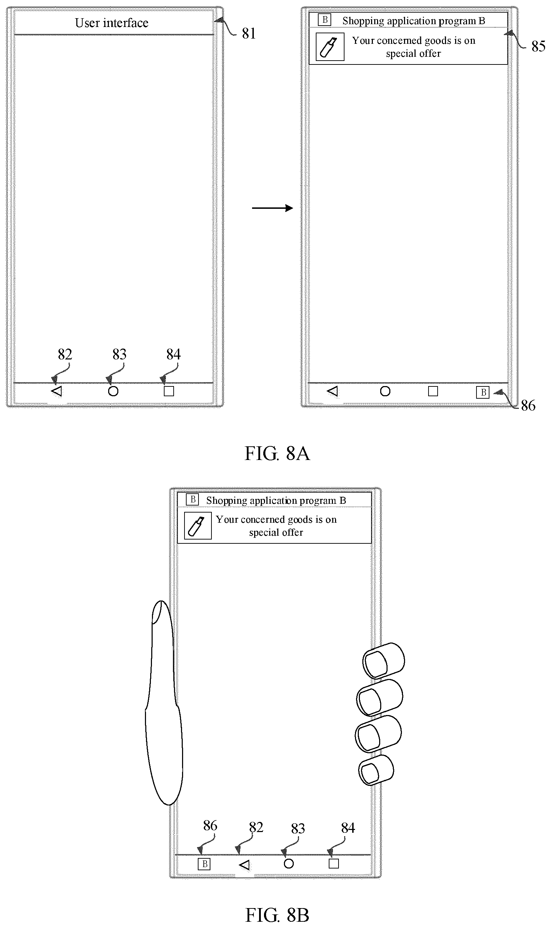

Schematically, that the message is a goods message is explained as an example. As shown in FIG. 8A, a current interface of the terminal is a user interface 81, a navigation bar includes three virtual buttons, which are respectively a back key 82, a home page key (also called Home key) 83, and a menu key 84; when a goods message of an application program B is received, the manner of displaying the message notification of the message on a banner popped up from the top of the touch display screen is adopted; the goods message of goods is displayed on a banner 85 popped up from the top of the touch display screen, and an operation control 86 corresponding to the message notification is additionally displayed in the navigation bar; the operation control 86 displays an icon of an application program corresponding to the message, that is, an icon of the application program B.

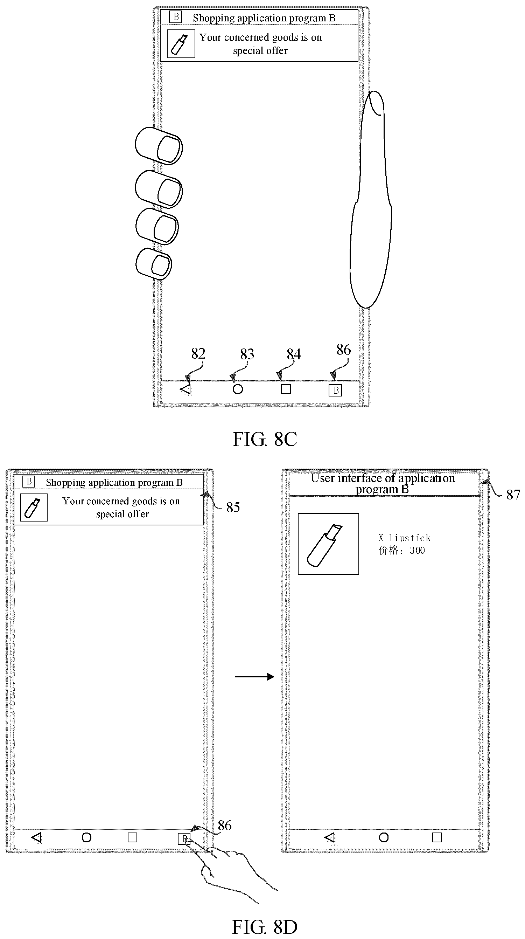

In this embodiment, that the operation control 86 is additionally displayed at the right of the menu key 84 is explained as an example. In a selectable embodiment, the navigation bar displays at least one virtual button, and a display area of the operation control is determined by determining a holding manner of a user for the terminal. In this embodiment, the holding manner includes a left hand holding manner and a right hand holding manner; when the holding manner is the left hand holding manner, the operation control corresponding to the message notification is additionally displayed at the left of the virtual button in the navigation bar; when the holding manner is the right hand holding manner, the operation control corresponding to the message notification is additionally displayed at the right of the virtual button in the navigation bar. FIG. 8B shows a schematic view of a schematic left hand holding manner, wherein a navigation bar includes three virtual buttons, which are respectively a back key 82, a home page key (also called Home key) 83, and a menu key 84; once receiving a message, an operation control 86 corresponding to a message notification is additionally displayed at the left of the virtual buttons in the navigation bar, that is, at the left of the back key 82. FIG. 8C shows a schematic view of a schematic right hand holding manner, wherein a navigation bar includes three virtual buttons, which are respectively a back key 82, a home page key (also called Home key) 83, and a menu key 84; once receiving a message, an operation control 86 corresponding to a message notification is additionally displayed at the right of the virtual buttons in the navigation bar, that is, at the right of the menu key 84.

Operation 704, a first touch signal triggered on the operation control is received.

A user can perform one or more operation(s) of clicking, double-clicking, long pressing, sliding, or the like on an operation control displayed by the touch display screen. An operation applied by a user can trigger a corresponding first touch signal on the touch display screen, and the terminal can receive the first touch signal on the operation control.

Operation 705, a pending intent message is created according to the first touch signal.

A pending intent message is a non-immediately executed message. That is, a system UI component does not need to immediately execute the pending intent message, but delivers the pending intent message to an application program corresponding to the message to process.

The pending intent message is configured to request displaying message content of the message.

Operation 706, an application program according to the pending intent message is determined.

The pending intent message is configured to call an application program. Optionally, the pending intent message is configured to call an application program corresponding to the message notification. Optionally, the pending intent includes a program identity of the application program corresponding to the message notification, and the application program is determined according to the program identity of the application program in the pending intent.

Operation 707, an application program is called according to the pending intent, and a second user interface is displayed by the application program.

Optionally, message content of the message is displayed in the second user interface. Optionally, the pending intent includes a message identity of the message; after the pending intent is obtained according to the first touch signal, the application program corresponding to the pending intent is called, the application program obtains the message identity in the pending intent, and displays the message content of the message.

Schematically, as shown in FIG. 8D, after a user clicks on the operation control 86, the first touch signal is triggered; the terminal displays the message content of the message, that is, a goods message of goods, on a user interface 87 of the application program B according to the first touch signal.

Operation 708, a second touch signal triggered on the operation control is received.

The second touch signal is a touch signal configured to stop displaying the message notification of the message, and/or stop displaying the operation control corresponding to the message notification.

A user can perform one or more operation(s) of clicking, double-clicking, long pressing, sliding, or the like on an operation control displayed by the touch display screen. Optionally, the second touch signal is a sliding signal sliding on the operation control corresponding to the message notification. An operation applied by a user can trigger a corresponding second touch signal on the touch display screen, and the terminal can receive the second touch signal on the operation control.

It should be noted that the first touch signal and the second touch signal are two kinds of different touch signals generated by different operations performed on the operation control displayed by the touch display screen by the user.

Operation 709, display of the message notification is stopped on the first user interface according to the second touch signal.

Operation 710, display of the operation control corresponding to the message notification is stopped in the navigation bar.

The terminal, through the system UI component, stops displaying the message notification on the first user interface, and stops displaying the operation control corresponding to the message notification.

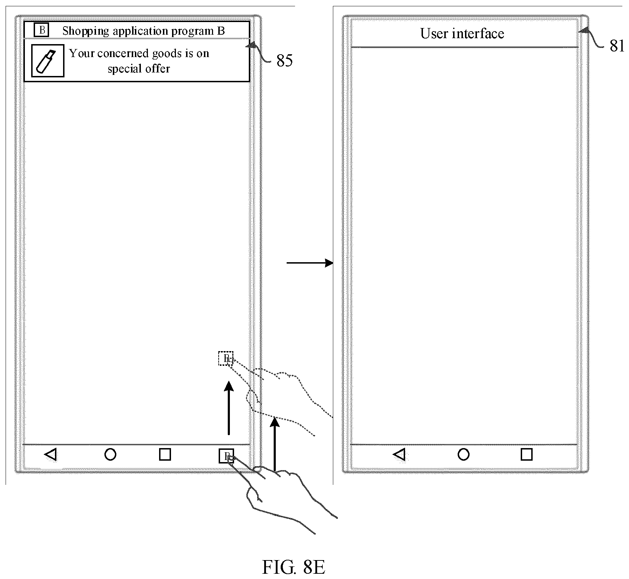

Schematically, that the second touch signal is a touch signal triggered by a user sliding along a direction from a bottom of the screen to a top of the screen on the operation control is explained as an example. As shown in FIG. 8E, after a user slides along a direction from a bottom of the screen to a top of the screen on the operation control 86, display of a message notification 85 is stopped in the user interface 81, and display of the operation control 86 corresponding to the message notification 85 is stopped in the navigation bar.

It should be noted that the operation 709 and the operation 710 are not limited to a specific executing sequence in actual operations, that is, it is possible to first execute the operation 709 and then execute the operation 710, it is also possible to first execute the operation 710 and then execute the operation 709, and it is further possible to execute the operation 709 and the operation 710 simultaneously.

Operation 711, a third touch signal triggered on the operation control is received.

The third touch signal is a touch signal configured to delete a received message. A user can perform one or more operation(s) of clicking, double-clicking, long pressing, sliding, or the like on an operation control displayed by the touch display screen. Optionally, the third touch signal is a signal of performing a long pressing operation on an operation control corresponding to the message notification. An operation applied by a user can trigger a corresponding third touch signal on the touch display screen, and the terminal can receive the third touch signal on the operation control.

The first touch signal, the second touch signal, and the third touch signal are three kinds of different touch signals generated by different operations performed on the operation control displayed by the touch display screen by the user. Triggering manners of the first touch signal, the second touch signal, and the third touch signal can be preset by developers or users.

Operation 712, the message is deleted according to the third touch signal.

Schematically, when the message is a short message, the short message is deleted according to the third touch signal; when the message is a multimedia message, the multimedia message is deleted.

Operation 713, when a displaying time length of the message notification reaches a preset displaying time length, display of the message notification is stopped on the first user interface.

Schematically, assuming that the preset displaying time length is 5 seconds, when the displaying time length of the message notification reaches a preset threshold value, i.e., reaches 5 seconds, display of the message notification is stopped on the first user interface. In actual operations, the preset displaying time length can be set by developers or set by users themselves.

Operation 714, when a displaying time length of the message notification reaches a preset displaying time length, display of the operation control corresponding to the message notification is stopped in the navigation bar.

Optionally, the terminal, through the system UI component, stops displaying the message notification on the first user interface, and stops displaying the operation control corresponding to the message notification.

It should be noted that the operation 704 to the operation 707, and the operation 708 to the operation 710 can be executed independently from each other, and it is also possible to first execute the operation 704 to the operation 707 and then execute the operation 708 to the operation 710; the operation 704 to the operation 707, and the operation 711 to the operation 712 can be executed independently from each other, and it is also possible to first execute the operation 704 to the operation 707 and then execute the operation 711 to the operation 712; the operation 704 to the operation 707, and the operation 713 to the operation 714 can be executed independently from each other, and it is also possible to first execute the operation 704 to the operation 707 and then execute the operation 713 to the operation 714; the operation 708 to the operation 710, the operation 711 to the operation 712, and the operation 713 to the operation 714 are executed independently from each other.

In conclusion, since a distance between a top and a bottom of a display screen is long, message notifications are usually displayed on a top of a touch display screen, while a navigation bar is displayed on a bottom of the touch display screen. When a terminal receives a message notification of a message, an operation control corresponding to the message notification is additionally displayed in a navigation bar;when a first touch signal is triggered on the operation control, message content of the message is displayed by a user interface of an application program corresponding to the message, so that a user can view the message content just through the operation control at a bottom of the touch display screen. Thus, the problem that it is difficult to touch a top of a touch display screen when a user operates a mobile terminal with a single hand is avoided, and effect of reducing mistaken operations of users, increasing functions of a navigation bar, and improving human-machine interaction efficiency is achieved.

By stopping displaying the message notification and the operation control corresponding to the message notification after triggering the second touch signal on the operation control, a user is enabled to stop displaying the message notification of the message through only the operation control at the bottom of the touch display screen. Thus, the problem that it is difficult to touch a top of a touch display screen and perform an operation for a message notification to stop display of the message notification when a user operates a mobile terminal with a single hand is avoided, and effect of increasing functions of a navigation bar and improving human-machine interaction efficiency is achieved.

By deleting the received message after triggering the third touch signal on the operation control, a user is enabled to delete the receive message through only the operation control at the bottom of the touch display screen. Thus, the operation that a user needs to start the application program corresponding to the message, and then delete the received message through the application program is simplified, and effect of increasing functions of a navigation bar and improving human-machine interaction efficiency is achieved.

By setting a preset displaying time length of the message notification, and stopping displaying the message notification and the operation control corresponding to the message notification when a displaying length of the message notification reaches the preset displaying time length, a user can stop display of the message notification and the operation control without any operation on the touch display screen, operation steps of stopping displaying the message notification and the operation control are simplified, and human-machine interaction efficiency is improved.

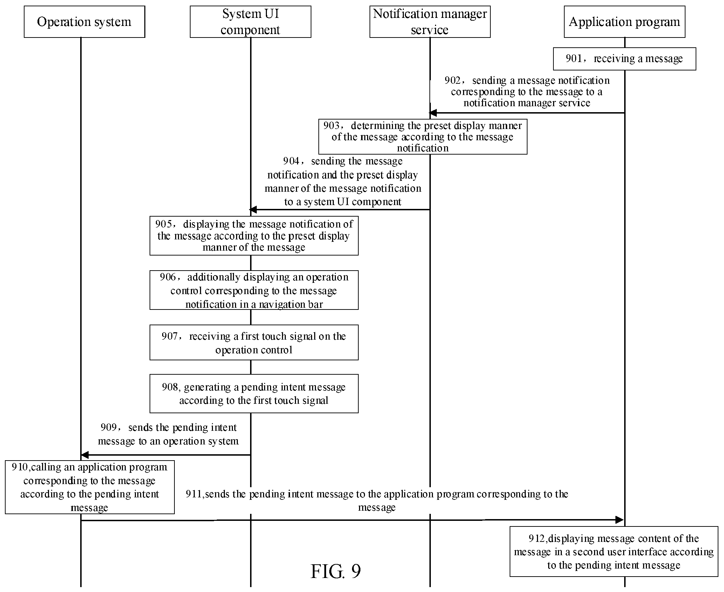

FIG. 9 is a flow chart of a message display method provided by another exemplary embodiment of the present disclosure, wherein that an operation system used by a terminal is an Android operation system is explained as an example. As shown in FIG. 9, the method comprises the following operations.

Operation 901, an application program receives a message.

The application program is an application program that has been installed in the terminal. Optionally, the application program receives a message sent from a server corresponding to the application program; alternatively, when the application program is a short message application program, receives a short message sent from an operator base station.

Operation 902, the application program sends a message notification corresponding to the message to a notification manager service.

Optionally, the message notification includes configuration parameter, such as a pending intent message corresponding to the message notification, a preset display manner of the message, etc.

Operation 903, the notification manager service determines the preset display manner of the message notification according to the message notification.

The notification manager service determines the display manner of the message according to the preset display manner in the message notification, the preset display manner is a message display manner preset by a developer or a user.

In this embodiment, that the preset display manner is "displaying the message notification on a banner popped up from the top of the touch display screen" is explained as an example.

Operation 904, the notification manager service sends the message notification and the preset display manner of the message notification to a system UI component.

Optionally, different display manners have different display identities; after determining the preset display manner of the message, the notification manager service sends the message notification and a display identity corresponding to the preset display manner to the system UI component.

Schematically, the preset display manner of the message is displaying the message notification of the message on a banner popped up from the top of the touch display screen, the display identity of the preset display manner is "banner", and the notification manager service sends the message notification and the display identity "banner" to the system UI component.

Operation 905, the system UI component displays the message notification of the message according to the preset display manner of the message.

Optionally, the message notification displayed in the preset display manner by the system UI component is located in a middle area and/or an area above the middle area of a touch display screen. The preset display manners include but are not limited to at least one of displaying the message notification in a status bar, displaying the message notification on a banner popped up from the top of the touch display screen, displaying the message notification on a lock screen interface, and displaying the message notification of the message in an superimposing manner at any position of a user interface.

Optionally, when the preset display manner is displaying the message notification in the status bar, the message notification displayed by the system UI component is located in an area above the middle area of the touch display screen; when the preset display manner is displaying the message notification on a banner popped up from the top of the touch display screen, the message notification displayed by the system UI component is located in a top of the touch display screen; when the preset display manner is displaying the message notification on a lock screen interface, the message notification displayed by the system UI component is located in an area above the middle area of the touch display screen; when the preset display manner is displaying the message notification of the message in an superimposing manner at any position of a user interface, the message notification displayed by the system UI component is located in a middle area of the touch display screen.

Schematically, the system UI component receives the message notification and the display identity "banner" of the message notification, and the system UI component displays the message notification on a banner popped up from a top of the touch display screen.

Operation 906, the system UI component additionally displays an operation control corresponding to the message notification in a navigation bar.

The system UI component displays a navigation bar and additionally displays an operation control corresponding to the message notification in the navigation bar.

Optionally, the system UI component can also determine whether to additionally display an operation control corresponding to the message notification in a navigation bar according to the preset display manner of the message notification. Schematically, when the preset display manner of the message notification is displaying the message notification on a banner popped up from the top of the touch display screen, the system UI component additionally displays an operation control corresponding to the message notification in the navigation bar; when the preset display manner of the message notification is displaying the message notification on a lock screen interface, the system UI component can also choose not to additionally display an operation control corresponding to the message notification in the navigation bar according to the preset display manner.

Operation 907, the system UI component receives a first touch signal on the operation control.

The first touch signal is a touch signal configured to call an application program corresponding to a message. Optionally, a user can perform one or more operation(s) of clicking, double-clicking, long pressing, sliding, or the like on an operation control displayed by the touch display screen. An operation applied by a user can trigger a corresponding first touch signal on the touch display screen, and the terminal can receive the first touch signal on the operation control.

Schematically, the user clicks on the operation control to generate the first touch signal, and the system UI component receives the first touch signal on the operation control.

Operation 908, the system UI component generates a pending intent message according to the first touch signal.

A pending intent message is a non-immediately executed message. That is, a system UI component does not need to immediately execute the pending intent message, but delivers the pending intent message to an application program corresponding to the message to process.

The pending intent message is configured to request displaying message content of a message. Optionally, the pending intent message includes a program identity of an application program corresponding to the message and a message identity of the message.

Operation 909, the system UI component sends the pending intent message to an operation system.

Operation 910, the operation system calls an application program corresponding to the message according to the pending intent message.

Optionally, the operation system calls an application program corresponding to the message according to the program identity of the application program corresponding to the message in the pending intent message.

Operation 911, the operation system sends the pending intent message to the application program corresponding to the message.

Operation 912, the application program displays message content of the message in a second user interface according to the pending intent message.

The application program displays message content of the message in the second user interface according to the message identity of the message in the pending intent message.

It should be explained that this embodiment takes that the operation control is displayed by the system UI component as an example. In different embodiments, if the application program corresponding to the message has authority or capability of modifying the navigation bar, it is also possible to use the application program corresponding to the message to additionally display the operation control corresponding to the message notification in the navigation bar, the present disclosure has no limit on this.

The following is a device embodiment of embodiments in the present disclosure. Regarding parts which are not described in detail in the device embodiment, it is possible to refer to technical details disclosed in the above method embodiments.

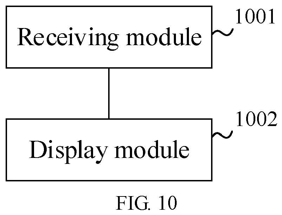

Referring to FIG. 10, which shows a structural diagram of a message display device provided by an embodiment of the present disclosure. As shown in FIG. 10, the message display device comprises the following parts.

A receiving module 1001 is configured to receive a message of an application program.

A display module 1002 displays a message notification of the message on a first display area of a screen.

The display module 1002 is further configured to additionally display an operation control corresponding to the message notification in a navigation bar; the operation control is a control configured to process the message notification, and the navigation bar is located in a second display area on the screen.

In an optional embodiment, the display module 1002 is further configured to display a second user interface of the application program according to a first touch signal, the second user interface is configured to display message content of the message.

In an optional embodiment, the display module 1002 comprises the following parts.

A generation sub-module is configured to generate a pending intent message according to the first touch signal.

A program sub-module is configured to determine the application program according to the pending intent message.

A display sub-module is configured to call the application program according to the pending intent message and display the second user interface by the application program.

In an optional embodiment, the display module 1002 is further configured to stop displaying the operation control corresponding to the message notification in the navigation bar when a displaying time length of the message notification reaches a preset displaying time length.

In an optional embodiment, the display module 1002 is further configured to stop displaying the message notification of the message on the first display area when a displaying time length of the message notification reaches a preset displaying time length.

In an optional embodiment, the receiving module 1001 is further configured to receive a second touch signal triggered on the operation control.

The display module 1002 is further configured to stop displaying the message notification on a first user interface according to the second touch signal.

The display module 1002 is further configured to stop displaying the operation control corresponding to the message notification in the navigation bar.

In an optional embodiment, the receiving module 1001 is further configured to receive a third touch signal triggered on the operation control.

The device further comprises the following part.

A deleting module is configured to delete the message according to the third touch signal.

In an optional embodiment, the navigation bar displays at least one virtual button.

The display module 1002 further comprises the following parts.

The navigation bar displays at least one virtual button. The display module comprises a determining sub-module and a display sub-module.

The determining sub-module is configured to determine a holding manner for a terminal, the holding manner includes a left hand holding manner and a right hand holding manner.

The display sub-module is further configured to additionally display the operation control corresponding to the message notification at the left of the virtual button in the navigation bar when the holding manner is the left hand holding manner.

The display sub-module is further configured to additionally display the operation control corresponding to the message notification at the right of the virtual button in the navigation bar when the holding manner is the right hand holding manner.

It should be explained that the above modules can be implemented by executing at least one instruction stored in a memory by a processor.

An embodiment of the present disclosure further provides a computer readable medium. The computer readable medium stores at least one instruction, and the at least one instruction is loaded and executed by a processor to implement the message display methods according to the above embodiments.

An embodiment of the present disclosure further provides a computer program product. The computer program product stores at least one instruction, and the at least one instruction is loaded and executed by a processor to implement the message display methods according to the above embodiments.

One of ordinary skill in the art should be capable of realizing that functions described in the embodiments of the present disclosure can be implemented by hardware, software, firmware, or any combination thereof in the above one or more examples. When implementing by software, these functions can be stored in a computer readable medium or transmitted as one or more instruction(s) or code(s) in a computer readable medium. The computer readable medium includes a computer storage medium and a communication medium, wherein the communication medium includes any medium being convenient to transmit computer programs from one position to another position, and the storage medium can be any usable medium being accessible by general or special computers.

The above description is merelypreferred embodiments of the present disclosure, and is not intended to limit the present disclosure. Any modifications, equivalent replacements, and improvements made within the spirit and principle of the present application should be included in the protection scope of the present disclosure.

## Claims

1. A message display method, comprising:
receiving a message from an application program;
displaying a message notification for the message in a first display area on a screen; and
additionally displaying an operation control corresponding to the message notification in a navigation bar, wherein the operation control is a control configured to process the message notification, and the navigation bar is located in a second display area on the screen.

2. The method according to claim 1, wherein, after the additionally displaying an operation control corresponding to the message notification in a navigation bar, the method further comprises:
receiving a first touch signal triggered on the operation control; and
displaying a second user interface of the application program according to the first touch signal, wherein the second user interface is configured to display message content of the message.

3. The method according to claim 2, wherein, the displaying a second user interface of the application program according to the first touch signal comprises:
generating a pending intent message according to the first touch signal;
determining the application program according to the pending intent message; and
calling the application program according to the pending intent message, and displaying the second user interface through the application program.

4. The method according to any one of claims 1-3, wherein, after the additionally displaying an operation control corresponding to the message notification in a navigation bar, the method further comprises:
when a displaying time length of the message notification reaches a preset displaying time length, stopping displaying the operation control corresponding to the message notification in the navigation bar.

5. The method according to claim 4, further comprising:
when a displaying time length of the message notification reaches a preset displaying time length, stopping displaying the message notification of the message on the first display area.

6. The method according to claim 1, wherein, after the additionally displaying an operation control corresponding to the message notification in a navigation bar, the method further comprises:
receiving a second touch signal triggered on the operation control;
stopping displaying the message notification on the first user interface according to the second touch signal; and
stopping displaying the operation control corresponding to the message notification in the navigation bar.

7. The method according to any one of claims 1-6, wherein, after the additionally displaying an operation control corresponding to the message notification in a navigation bar, the method further comprises:
receiving a third touch signal triggered on the operation control; and
deleting the message according to the third touch signal.

8. The method according to any one of claims 1-6, wherein, the navigation bar displays at least one virtual button;
the additionally displaying an operation control corresponding to the message notification in a navigation bar comprises:
determining a holding manner for a terminal, wherein the holding manner includes a left hand holding manner and a right hand holding manner;
when the holding manner is the left hand holding manner, additionally displaying the operation control corresponding to the message notification at the left of the virtual button in the navigation bar; and
when the holding manner is the right hand holding manner, additionally displaying the operation control corresponding to the message notification at the right of the virtual button in the navigation bar.

9. The method according to any one of claims 1-6, wherein, the message is a short message and the application program is a short message application program; or the message is a goods message and the application program is a shopping application program; or the message is a news message and the application program is a news application program; or the message is a reminder message and the application program is a memorandum application program; or the message is a multimedia message and the application program is a player application program; or the message is an instant communication message and the application program is an instant communication application program.

10. A message display device, comprising:
a receiving module configured to receive a message from an application program; and
a display module configured to display a message notification for the message in a first display area on a screen;
wherein, the display module is further configured to additionally display an operation control corresponding to the message notification in a navigation bar, wherein the operation control is a control configured to process the message notification, and the navigation bar is located in a second display area on the screen.

11. The device according to claim 10, wherein, the receiving module is further configured to receive a first touch signal triggered on the operation control; and
the display module is further configured to display a second user interface of the application program according to the first touch signal, wherein the second user interface is configured to display message content of the message.

12. The device according to claim 11, wherein, the display module comprises:
a generation sub-module configured to generate a pending intent message according to the first touch signal;
a program sub-module configured to determine the application program according to the pending intent message; and
a display sub-module configured to call the application program according to the pending intent message, and display the second user interface through the application program.

13. The device according to claim 11, wherein, the display module is further configured to: when a displaying time length of the message notification reaches a preset displaying time length, stop displaying the operation control corresponding to the message notification in the navigation bar.

14. The method according to claim 13, wherein, the display module is further configured to: when a displaying time length of the message notification reaches a preset displaying time length, stop displaying the message notification of the message on the first display area.

15. The device according to claim 10, wherein:
the receiving module is further configured to receive a second touch signal triggered on the operation control;
the display module is further configured to stop displaying the message notification on the first user interface according to the second touch signal; and
the display module is further configured to stop displaying the operation control corresponding to the message notification in the navigation bar.

16. The device according to any one of claims 10-15, wherein,
the receiving module is further configured to receive a third touch signal triggered on the operation control; and
the device further comprises a deleting module configured to delete the message according to the third touch signal.

17. The device according to any one of claims 10-15, wherein, the navigation bar displays at least one virtual button; the display module comprises a determining sub-module and a display sub-module;
the determining sub-module is configured to determine a holding manner for a terminal, wherein the holding manner includes a left hand holding manner and a right hand holding manner;
the display module is configured to: when the holding manner is the left hand holding manner, additionally display the operation control corresponding to the message notification at the left of the virtual button in the navigation bar; and
the display module is further configured to: when the holding manner is the right hand holding manner, additionally display the operation control corresponding to the message notification at the right of the virtual button in the navigation bar.

18. A terminal comprising a processor and a memory; wherein, the memory stores at least one instruction, and the instruction is loaded and executed by the processor to implement the message display method according to any one of claims 1-9.

19. A computer readable storage medium, wherein, the storage medium stores at least one instruction, and the instruction is loaded and executed by a processor to implement the message display method according to any one of claims 1-9.
